# EUROPEAN PATENT SPECIFICATION

(11) **EP 3 937 043 B1**
(45) Date of publication and mention of the grant of the patent: **28.02.2024**
(21) Application number: 21179525.7
(22) Date of filing: 15.06.2021
(51) Int. Cl.: H04L 9/00, G06F 21/55, G06F 21/64, G06F 21/72, G06F 21/76, H04L 9/32

(54) **BLOCKCHAIN INTEGRATED STATIONS AND BLOCKCHAIN NETWORKS**
INTEGRIERTE BLOCKCHAIN-STATIONEN UND BLOCKCHAIN-NETZWERKE
STATIONS INTÉGRÉES DE CHAÎNE DE BLOCS ET RÉSEAUX DE CHAÎNE DE BLOCS

(30) Priority: 08.07.2020 CN 202010652951
(43) Date of publication of application: 12.01.2022
(73) Proprietor: Alipay (Hangzhou) Information Technology Co., Ltd., Hangzhou, Zhejiang 310000 (CN)
(72) Inventor: WEI, Changzheng, Hangzhou, Zhejiang 310000 (CN); YAN, Ying, Hangzhou, Zhejiang 310000 (CN); ZHANG, Hui, Hangzhou, Zhejiang 310000 (CN)
(74) Representative: Goddar, Heinz J.

(56) References cited:
- EP-A2- 3 574 461
- EP-A2- 3 628 087
- EP-B1- 3 628 087
- US-A1- 2019 279 206

## Description

### TECHNICAL FIELD

One or more embodiments of the present disclosure relate to the field of terminal technologies, and in particular, to blockchain integrated stations and blockchain networks.

### BACKGROUND

Blockchain technology (also known as distributed ledger technology) is a decentralized distributed database technology. This technology has a plurality of characteristics such as decentralization, openness, transparency, tamper-resistance, and trustworthiness, and is applicable to many scenarios with high demands for data reliability.

EP 3 574 461 A2 discloses an approach for detecting replay attack. A blockchain node obtains at least one candidate transaction comprising a timestamp for adding to a blockchain and verifies whether the timestamp is within a validation range and whether an identification of the candidate transaction exists in an identification database. If the timestamp is within the validation range and the identification does not exist in the identification database, the blockchain node determines that the candidate transaction is not associated with a replay attack.

US 2019/279206 A1 discloses an approach for off-chain smart contract service based on trusted execution environment (TEE). A smart contract service provider including a TEE and off the target blockchain network receives a request, from a client associated with a target blockchain network, for operating cross-chain data of blockchain networks which are different from the target blockchain. The smart contract service provider sends a request for the cross-chain data to a data visiting service provider, receives the cross-chain data and returns a result generated by the TEE using the cross-chain data to the client.

EP 3 628 087 A2 discloses an approach for configuring a field programmable gate array (FPGA) based trusted execution environment for use in a blockchain network. A server stores a device identifier, a first random number, and a first encryption key in a FPGA device, and sends an encrypted bitstream to the FPGA device, in which the encrypted bitstream is decrypted by the first key into a decrypted bitstream comprising a second random number. The server receives an encrypted message from the FPGA device and decrypts the encrypted message from the FPGA device using a third key to produce a decrypted message. In response to successful decryption, the server determines a third random number in the decrypted message, encrypts keys using the third random number, and sends the keys to the FPGA device.

### SUMMARY

The invention is defined by a device and a system according to the independent claims. Preferred embodiments are defined in the dependent claims.

In view of this, one or more embodiments of the present disclosure provide a blockchain integrated station and a blockchain network.

One or more embodiments of the present disclosure provide the following technical solutions:

According to a first aspect of one or more embodiments of the present disclosure, a blockchain integrated station is provided, where the blockchain integrated station includes a blockchain node device, and the blockchain node device includes a smart network card, a central processing unit, a smart contract processing chip, and a memory;

the smart network card is configured to perform transaction consensus with other nodes in a blockchain network to which the blockchain node device belongs, and upload the transaction that passed the consensus to the central processing unit;

the central processing unit is configured to receive the transaction uploaded by the smart network card and send the transaction for calling a smart contract to the smart contract processing chip;

the smart contract processing chip is configured to receive the transaction sent by the central processing unit and execute the smart contract called by the transaction;

the memory is configured to store blockchain data and status data.

According to a second aspect of one or more embodiments of the present disclosure, a blockchain network is provided, where the blockchain network includes a plurality of blockchain nodes formed by the blockchain integrated stations according to the first aspect.

### BRIEF DESCRIPTION OF THE DRAWINGS

FIG. 1 is a schematic structural diagram of a blockchain integrated station according to example embodiments.
FIG. 2 is a schematic structural diagram of a blockchain node device according to example embodiments.
FIG. 3 is a schematic structural diagram of an intelligent network card according to example embodiments.
FIG. 4 is a schematic structural diagram of a smart contract processing chip according to example embodiments.
FIG. 5 is a schematic structural diagram of another blockchain node device according to example embodiments.
FIG. 6 is a schematic structural diagram of a cryptographic accelerator card according to example embodiments.
FIG. 7 is a schematic structural diagram of another blockchain node device according to example embodiments.
FIG. 8 is an architecture diagram of a blockchain network according to example embodiments.

### DETAILED DESCRIPTION OF THE EMBODIMENTS

Example embodiments will be described in detail herein, and examples of the example embodiments are shown in the accompanying drawings. When the following description involves the accompanying drawings, unless otherwise indicated, the same numbers in different accompanying drawings represent the same or similar elements. The implementations described in the following example embodiments are not all the implementations consistent with one or more embodiments of the present disclosure, but are instead merely embodiments of methods and apparatuses that are described in detail in the appended claims and that are consistent with some aspects of one or more embodiments of the present disclosure.

It should be noted that in other embodiments, the steps of corresponding methods are not necessarily performed according to a sequence shown and described in the present disclosure. In some other embodiments, the methods can include more or fewer steps than those described in the present disclosure. In addition, a single step described in the present disclosure can be divided into a plurality of steps for description in other embodiments, and a plurality of steps described in the present disclosure can be combined into a single step for description in other embodiments.

In the early stage of development of the blockchain technology, users mostly add their own personal computer (PC) and laptop computer and the like into a blockchain network to become a blockchain node in the blockchain network. At this time, the stage can be called 1.0 architecture era of blockchain network, in which the behaviors of users to participate in the blockchain network are autonomous and the users also need to perform autonomous maintenance, for example, perform maintenance and configuration and so on for their devices (for example, PC) participating in the blockchain network. Along with continuous development of the blockchain technology, especially along with increasing needs of users for infrastructures with high performance and high availability, the blockchain network develops into 2.0 architecture era based on cloud service. In the 2.0 architecture era, Blockchain-as-a-Service (BaaS) provides fast and convenient solutions for fast blockchain deployment and technical implementation and supports a large number of blockchain service projects. Generally, BaaS is built on infrastructures such as public cloud or private cloud, which introduces heavy dependence on infrastructure as well as providing strong deployment capability. However, because blockchain is a typical distributed computing technology, not all nodes can be migrated to clouds but privatization deployment is needed. The additional technical migration and maintenance costs brought by the privatization deployment cause inconsistent technical interfaces and high deployment and maintenance costs during an actual implementation.

Therefore, in order to avoid the problems of inconsistent interfaces and high deployment and maintenance costs caused by privatization deployment, the present disclosure further upgrades the architecture of the blockchain network, realizing architecture 3.0 architecture era based on a blockchain integrated station.

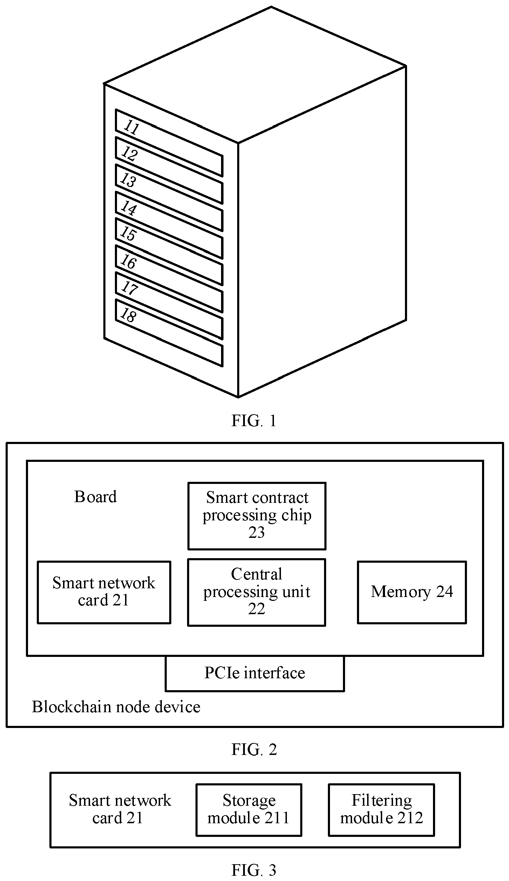

FIG. 1 is a schematic structural diagram of a blockchain integrated station according to example embodiments of the present disclosure. As shown in FIG. 1, the blockchain integrated station can include a plurality of assembly positions 11 to 18.

In the present disclosure, at least one assembly position of the blockchain integrated station is equipped with a blockchain node device. For example, the blockchain node device can be assembled at the assembly position 11 shown in FIG. 1 to form a blockchain network together with blockchain node devices in other blockchain integrated stations. Certainly, this is merely an example, and the blockchain integrated station can be equipped with either only one blockchain node device or a plurality of blockchain node devices. If the blockchain integrated station is equipped with only one blockchain node device, each blockchain node in the blockchain network corresponds to a respective blockchain integrated station. If the blockchain integrated station is equipped with a plurality of blockchain node devices, the blockchain integrated station includes a plurality of blockchain nodes included in the blockchain network.

In the present disclosure, both the hardware and the software of the blockchain node device equipped in the blockchain integrated station are optimized. The following describes the structure of the blockchain node device.

FIG. 2 is a schematic structural diagram of a blockchain node device according to example embodiments. As shown in FIG. 2, the blockchain node device includes a smart network card 21, a central processing unit 22, a smart contract processing chip 23, and a memory 24.

The smart network card 21 is configured to perform transaction consensus with other nodes in a blockchain network to which the blockchain node device belongs, and upload the transaction that passed the consensus to the central processing unit 22.

The central processing unit 22 is configured to receive the transaction uploaded by the smart network card 21 and send the transaction for calling a smart contract to the smart contract processing chip 23.

The smart contract processing chip 23 is configured to receive the transaction sent by the central processing unit 22 and execute the smart contract called by the transaction.

The memory 24 is configured to store blockchain data and status data.

In the present disclosure, the smart network card 21 cannot only implement functions of a traditional network card, but also can replace or assist the central processing unit 22 of the blockchain integrated station to complete part of functions. For example, the smart network card 21 can perform transaction consensus with other nodes in the blockchain network to which the blockchain node device belongs, and upload the transaction that passed the consensus to the central processing unit 22. That is, the function of transaction consensus that was in the central processing unit 22 is offloaded to the smart network card 21.

Compared with other components in the blockchain node device, especially the central processing unit 22, the smart network card 21 is closer to the network in physical level and logic level, so that the smart network card 21 always receives transactions transmitted in the network first. Therefore, the smart network card 21 is used to perform transaction consensus in the case of no memory access or a small amount of memory access is involved, so that the central processing unit 22 does not need to directly participate in the process of consensus. This can significantly improve the efficiency of the consensus.

The smart network card 21 can also filter received transactions. Specifically, the smart network card 21 can include a storage module 211 and a filtering module 212 shown in FIG. 3. The storage module 211 is configured to record a transaction filtering rule; the filtering module 212 is electrically connected to the storage module 211 and is configured to read the transaction filtering rule recorded in the storage module 211, and perform filtering after parsing the received transactions based on the transaction filtering rule, so that the filtered transaction participates in the transaction consensus.

The filtering rule stored in the storage module 211 can be filtering out replay transactions. For example, when receiving a transaction, the filtering module 212 can compare the transaction with historical transactions, for example, compare fields such as transmitted information, destination address, timestamp, hash value, so as to identify and filter out replay transactions. Alternatively, the filtering rule can be filtering out illegal transactions or predefined types of transactions. For example, the filtering module 212 can parse contents of received transactions to identify illegal transactions and/or predefined types of transactions, and then filter out such transactions.

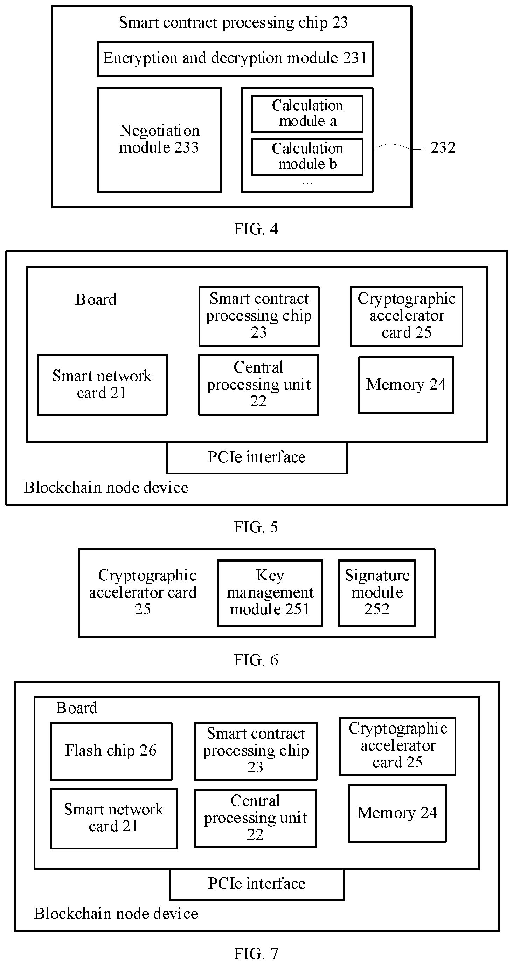

The smart contract processing chip 23 in the present disclosure can include an encryption and decryption module 231 and a calculation module 232 shown in FIG. 4. The calculation module 232 is electrically connected to the encryption and decryption module 231 and the central processing unit 22. The encryption and decryption module 231 is configured to: in a case that the transaction sent by the central processing unit 22 is a ciphertext transaction, decrypt the ciphertext transaction by using a node private key of the blockchain node device and send plaintext transaction content obtained after the decryption to the calculation module 232, so that the calculation module 232 executes a smart contract called by the plaintext transaction content after receiving the plaintext transaction content. After the smart contract is executed, the calculation module 232 returns a contract status value to the encryption and decryption module 231, so that the encryption and decryption module 231 encrypts the returned contract status value by using a service key. Correspondingly, the calculation module 232 is also configured to: in a case that the transaction sent by the central processing unit 22 is a plaintext transaction, execute a smart contract called by the plaintext transaction.

The smart contract processing chip 23 can further include a negotiation module 233 shown in FIG. 4. The negotiation module 233 is configured to generate negotiation information, and the negotiation information is used for generating a file deployment key and a service secret deployment key through negotiation.

As shown in FIG. 5, the blockchain node device can further include a cryptographic accelerator card 25. The cryptographic accelerator card 25 can implement a fully encrypted memory, defend against side channel attacks through hardware reinforcement, and implement physical protection against approaches such as probes, lasers, and the like. Therefore, the cryptographic accelerator card has very high security. For example, the cryptographic accelerator card 25 used in the blockchain integrated station can have level-2, level-3 qualification from the State Cryptography Administration 2, or the like.

Specifically, the cryptographic accelerator card 25 can include a key management module 251 and a signature module 252 shown in FIG. 6. The key management module 251 is configured to maintain a root of trust key; and the signature module 252 is electrically connected to the key management module 251, the negotiation module 233, and the smart network card 21, and is configured to read the root of trust key and sign the negotiation information, and send the signed negotiation information to a provider of the blockchain integrated station via the smart network card 21, so that the provider deploys a binary image file corresponding to the blockchain node device on the blockchain integrated station by using the file deployment key obtained through negotiation, and deploys the node private key and the service key on the smart contract processing chip 23 by using the service secret deployment key obtained through negotiation. In other words, the cryptographic accelerator card 25 can replace the smart contract processing chip 23 to complete the operations such as information encryption and key negotiation. In addition to ensuring security, the cryptographic accelerator card 25 can also offload tasks from the smart contract processing chip 23 to improve the processing efficiency.

It should be stated that in actual operations, the key negotiation, the deployment of the binary image file, and the deployment of the node private key and the service key are usually three independent processes. Specifically, the blockchain node device can perform key negotiation with the provider of the blockchain integrated station based on the negotiation information to obtain the file deployment key and the service secret key, and deploy the file deployment key and the service secret key to the smart contract processing chip 23. Based on this, the provider can send the binary image file encrypted by using the file deployment key to the smart contract processing chip 23. The smart contract processing chip 23 can decrypt the encrypted binary image file based on the file deployment key obtained through negotiation in advance, so as to deploy the binary image file obtained through decryption. Further, after updating the binary image file, the provider can send the updated binary image file to the smart contract processing chip 23 by using the file deployment key, so that the smart contract processing chip 23 can re-deploy the binary image file. Correspondingly, the provider can encrypt the node private key and the service key of the blockchain node by using the service secret deployment key, and send the node private key and the service key to the smart contract processing chip 23, so that the smart contract processing chip 23 decrypts the node private key and the service key by using the service secret deployment key and deploys the node private key and the service key locally.

After the node private key and the service key are deployed in the smart contract processing chip 23 in the previous-mentioned method, a private transaction needs in a blockchain scenario can be satisfied. For example, the node private key corresponds to a node public key, a client device can encrypt and transmit a blockchain transaction by using the node public key, and the blockchain node device can decrypt the blockchain transaction by using the node private key. The service key is a symmetric key, which can be used to encrypt and store service data such as contract code and contract status values. The service key cannot be used directly, and the smart contract processing chip 23 can encrypt and decrypt the service key by using a derived key of the service key, to reduce a security risk of the service key. Through reliable management for the node private key and the service root key (or its derivation key), data will be always in encrypted state unless processed by the smart contract processing chip 23. Therefore, the smart contract processing chip 23 actually forms a Trusted Execution Environment (TEE) of hardware on the blockchain integrated station, so as to ensure the data requiring privacy protection such as transactions, contract codes, and contract statuses will not be leaked.

In the present disclosure, the smart contract processing chip 23 is obtained by configuring a field-programmable gate array (FPGA) chip according to a predefined circuit logic configuration file, so as to improve the processing efficiency specific for the smart contract. However, the FPGA chip is volatile, and the deployed circuit logic configuration file will be lost after a power-off, the circuit logic configuration file needs to be re-deployed in the FPGA after a power-on. Therefore, a flash chip 26 shown in FIG. 7 is also configured on the blockchain node device, to store the circuit logic configuration file, so that the FPGA chip 26 can be configured as the smart contract processing chip 23 by using the circuit logic configuration file stored by the flash chip 26 after each power-on.

In order to further improve the execution efficiency of the smart contract, the smart contract processing chip 23 can include a plurality of calculation modules, for example, a calculation module *a,* and a calculation module *b* shown in FIG. 4, so that the smart contract processing chip 23 can execute a plurality of smart contracts called by different transactions in parallel to improve the contract execution efficiency.

In the present disclosure, the smart network card 21, the central processing unit 22, the smart contract processing chip 23, the memory 24, the cryptographic accelerator card 25 and the flash chip 26 can all be assembled on a board, and the board can be connected to the blockchain node device through a PCIE interface. The board can be an FPGA board or another type of board, which is not limited in the present disclosure.

It can be seen from the above-mentioned technical solutions that the blockchain node device in the present disclosure is equipped with the smart network card and the smart contract processing chip in addition to traditional components such as the central processing unit and the memory. When the blockchain node device receives transaction, the smart network card closer to the network side performs transaction consensus, so that the central processing unit does not need to directly participate in the transaction consensus, which reduces the processing resources occupied by the central processing unit while improving the consensus efficiency. The smart contract is not executed by a traditional blockchain node device like the central processing unit, but is executed by the smart contract processing chip, which not only improves the execution efficiency of the smart contract, but also reduces the resources occupied by the central processing unit.

Further, the blockchain node device is further equipped with the cryptographic accelerator card. The cryptographic accelerator card maintains the root of trust key, so that the smart contract processing chip is capable of performing key negotiation with the provider of the blockchain integrated station by using the cryptographic accelerator card to obtain the file deployment key and the service secret deployment key. On one hand, the smart contract processing chip can obtain the binary image file from the provider based on the file deployment key; on the other hand, the smart contract processing chip can obtain the node private key and the service key for data encryption and decryption by using the service secret deployment key. In other words, by deploying the cryptographic accelerator card, the blockchain node device can proactively deploy the binary image file to form blockchain nodes, and proactively obtain keys for service transmission, thereby realizing encrypted transmission of data.

Further, by assembling the blockchain node device in the blockchain integrated station, the blockchain integrated station can form, based on the blockchain node device, a blockchain network with blockchain node devices in other blockchain integrated stations, so that users can obtain corresponding software code while obtaining the blockchain integrated station from the provider, without deploying blockchain nodes, realizing the integration of software and hardware.

In addition to the blockchain node device, the blockchain integrated station in the present disclosure can also be equipped with other devices to satisfy different needs of users.

It should be understood that the blockchain node device is configured to: if the transaction is received and the transaction passed consensus, execute the smart contract called by the transaction. In this process, external data may need to be called. For example, transactions stored in or smart contracts deployed in blockchain networks different than the blockchain network to which the blockchain node device belongs need to be called, and data stored in an off-chain remote server need to be called.

Therefore, the blockchain integrated station can also be equipped with a cross-chain proxy server. For example, the cross-chain proxy server can be assembled at an assembly position 12 shown in FIG. 1 to satisfy the needs for external data access. Specifically, when receiving an external data access request initiated by the blockchain node device, the cross-chain proxy server can access a target blockchain network or a remote server, so as to send data to the target blockchain network or the remote server and/or return an access result to the blockchain node device.

In the present disclosure, the blockchain integrated station can also be equipped with an off-chain computing node device. For example, the off-chain computing node device can be assembled at an assembly position 13 shown in FIG. 1, and a plurality of off-chain contracts are pre-deployed in the off-chain computing node device for the blockchain node device to call. Based on this, the off-chain computing node device can respond to an off-chain contract calling request initiated by the blockchain node device to execute an off-chain contract indicated by the off-chain contract calling request, and return an execution result of the off-chain contract to the blockchain node device.

Assembling the off-chain computing node device in the blockchain integrated station enables the blockchain node device to distribute computing tasks to the off-chain computing node devices, so that the blockchain node devices can have more processing resources to execute the smart contract, which improves the contract execution efficiency of the blockchain node device.

In actual applications, the blockchain node device can distribute the computing tasks in various manners. For example, in one case, computing tasks of a predetermined type can be distributed to the off-chain computing node device. In this case, when the blockchain node device needs to execute computing tasks of the predetermined type, the off-chain contract in the off-chain computing node device can be called. In another case, under the condition that the processing resources in the blockchain node device are all occupied, the overflow computing tasks can be executed by calling the off-chain contract in the off-chain computing node device. Certainly, this is merely an example, and a person skilled in the art can determine a method of distributing the computing tasks according to the actual situation, which is not limited in the present disclosure.

A certificate authority device can also be assembled in the blockchain integrated station. For example, the certificate authority device can be assembled at an assembly position 14 shown in FIG. 1. After the certificate authority device is enabled, an embedded certificate authority service can be started, so as to generate a root certificate for issuing digital certificates. Based on this, after receiving an authentication request initiated by the blockchain node device, the certificate authority device can verify the authentication request, and send a digital certificate to the blockchain node device by using the root certificate if the authentication request passes verification.

By assembling the certificate authority device, the digital certificate authority service is embedded in the blockchain integrated station, which can implement automatic issuance of digital certificates and automatic authentication of node identities, so that the blockchain integrated station can automatically build a blockchain and the blockchain nodes can automatically join the blockchain, implementing plug-and-play of the blockchain integrated station.

In the present disclosure, the hardware of the blockchain node device in the blockchain integrated station can be optimized on the basis of the structure of the blockchain integrated station, and the integration of software and hardware can be implemented by deploying corresponding software in the blockchain node device.

On the basis of the blockchain integrated station, the present disclosure further discloses a blockchain network.

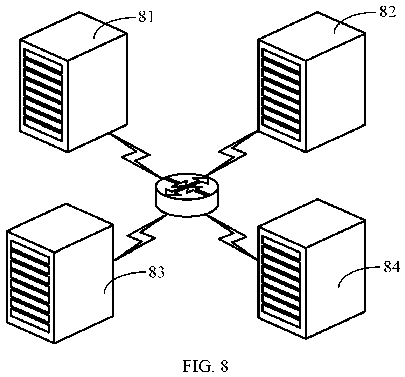

FIG. 8 is a schematic diagram of a blockchain network according to example embodiments. As shown in FIG. 8, the blockchain network includes a plurality of blockchain nodes formed by the above-mentioned blockchain integrated stations.

It should be understood that although only four blockchain integrated stations numbered 81 to 84 are shown in FIG. 8, in actual applications, the blockchain network can include more or fewer blockchain integrated stations.

The manner of processing a transaction in the blockchain node device included in the blockchain integrated station in this embodiment is similar to that in the previous embodiment, and will not be described in detail in this embodiment.

In this embodiment, each blockchain integrated station can include only one blockchain node device. In this case, each blockchain integrated station serves as one blockchain node in the blockchain network. For example, the blockchain integrated stations 81 to 84 shown in FIG. 8 only serve as one blockchain node in the blockchain network.

In this embodiment, each blockchain integrated station can also include a plurality of blockchain node devices. In other words, one blockchain integrated station in this embodiment can serve as a plurality of blockchain nodes in the blockchain network, that is, the plurality of blockchain node devices included in the blockchain integrated station form a blockchain node. For example, the blockchain integrated station 81 shown in FIG. 8 can include three blockchain node devices, and a binary image file developed by the provider of the blockchain integrated station is deployed in each of the three blockchain node devices. Therefore, three blockchain nodes in the blockchain network shown in FIG. 8 are formed.

The blockchain nodes included in the blockchain network in this embodiment can adopt a proof of work (POW) mechanism to perform transaction consensus, or adopt a Practical Byzantine Fault Tolerance (PBFT) mechanism to perform transaction consensus, which is not limited in the present disclosure.

In actual applications, users that need to build a blockchain network can purchase the blockchain integrated station through negotiation. After the purchased blockchain integrated station is powered on, each blockchain integrated station can proactively deploy a blockchain binary image file to form blockchain nodes, and then build the blockchain network together with other blockchain integrated stations.

It can be seen that through the blockchain integrated station in the present disclosure, users do not need not deploy code for a blockchain, as in the related art, after purchasing hardware. Instead, users only need to power on the blockchain integrated station and access the network to build a blockchain network together with blockchain nodes formed by the blockchain integrated stations with the same configuration purchased by other users. This implements the integration of software and hardware, and improves the deployment efficiency on the basis of satisfying the needs of users for deploying private blockchains.

The present disclosure is intended to cover any variations, uses, or adaptations of the present disclosure following the general principles thereof and including such departures from the present disclosure as come within known or customary practice in the art. It is intended that the present disclosure and examples be considered as examples only, with a true scope of the present disclosure being indicated by the claims below.

The above-mentioned descriptions are merely preferred embodiments of the present disclosure, but are not intended to limit the present disclosure. Any modification, equivalent replacement, or improvement made without departing from the principle of the present disclosure shall fall within the protection scope of the present disclosure.

## Claims

1. A blockchain integrated station, comprising a blockchain node device, the blockchain node device comprising a smart network card (21), a central processing unit (22), a smart contract processing chip (23), a memory (24), and a cryptographic accelerator card (25); wherein
the smart network card (21) is configured to perform transaction consensus with other nodes in a blockchain network to which the blockchain node device belongs, and upload a transaction that passed the transaction consensus to the central processing unit (22);
the central processing unit (22) is configured to receive the transaction uploaded by the smart network card (21) and send the transaction for calling a smart contract to the smart contract processing chip (23);
the smart contract processing chip (23) is configured to receive the transaction sent by the central processing unit (22) and execute the smart contract called by the transaction and comprises a calculation module, an encryption and decryption module, and a negotiation module;
the encryption and decryption module is configured to in a case that the transaction sent by the central processing unit (22) is a ciphertext transaction, decrypt the ciphertext transaction by using a node private key of the blockchain node device and encrypt a contract status value involved in the smart contract called by the ciphertext transaction by using a service key, wherein the node private key corresponds to a node public key, and the transaction is encrypted and transmitted by using the node public key by a client device and the encrypted and transmitted transaction is decrypted by using the node private key by the blockchain node device, and wherein the service key is a symmetric key used to encrypt and store service data;
the calculation module is electrically connected to the central processing unit (22) and the encryption and decryption module and is configured to receive a plaintext transaction sent by the central processing unit (22) and call a corresponding smart contract, and is configured to receive a plaintext transaction content obtained after the encryption and decryption module decrypts the ciphertext transaction, call the corresponding smart contract, and return the contract status value to the encryption and decryption module for encryption;
the negotiation module is configured to generate negotiation information, and the negotiation information is used for generating a file deployment key and a service secret deployment key through negotiation;
the memory (24) is configured to store blockchain data and status data;
the cryptographic accelerator card (25) comprises a key management module and a signature module;
the key management module is configured to maintain a root of trust key; and
the signature module is electrically connected to the key management module, the negotiation module, and the smart network card (21), and is configured to read the root of trust key and sign the negotiation information, and send the signed negotiation information to a provider of the blockchain integration station via the smart network card (21), so that the provider deploys a binary image file corresponding to the blockchain node device on the blockchain integrated station by using the file deployment key obtained through negotiation, wherein the binary image file encrypted by using the file deployment key is received by the smart contract processing chip (23) from the provider and the encrypted binary image file is decrypted by the smart contract processing chip (23) based on the file deployment key, and deploys the node private key and the service key on the smart contract processing chip (23) through the service secret deployment key, wherein the node private key and the service key of the blockchain node are encrypted by using the service secret deployment key and are received by the smart contract processing chip (23) from the provider, so that the smart contract processing chip (23) decrypts the node private key and the service key by using the service secrete deployment key and deploys the node private key and the service key locally.

2. The blockchain integrated station according to claim 1, wherein the smart network card (21) comprises:
a storage module, configured to record a transaction filtering rule; and
a filtering module, electrically connected to the storage module and configured to read the transaction filtering rule recorded in the storage module, and perform filtering after parsing the received transaction based on the transaction filtering rule, so that a filtered transaction participates in the transaction consensus.

3. The blockchain integrated station according to claim 1, wherein
the smart contract processing chip (23) comprises a plurality of calculation modules, and the plurality of calculation modules are configured to execute smart contracts called by different transactions in parallel.

4. The blockchain integrated station according to claim 1, wherein the smart contract processing chip (23) is obtained by configuring an FPGA chip by using a predefined circuit logic configuration file.

5. The blockchain integrated station according to claim 4, wherein the blockchain node device further comprises a flash chip (26); the flash chip (26) is electrically connected to the smart contract processing chip (23), and the flash chip (26) is configured to store the predefined circuit logic configuration file.

6. The blockchain integrated station according to claim 1, further comprising an off-chain computing node device, wherein the off-chain computing node device is configured to:
in response to an off-chain contract calling request initiated by the blockchain node device, execute an off-chain contract indicated by the off-chain contract calling request, and return an execution result of the off-chain contract to the blockchain node device; wherein
the off-chain contract is pre-deployed on the off-chain computing node device.

7. The blockchain integrated station according to claim 1, further comprising a cross-chain proxy server, wherein the cross-chain proxy server is configured to:
in response to an external data access request initiated by the blockchain node device, perform at least one of: accessing a target blockchain network or a remote server to send data to the target blockchain network or the remote server, or returning an access result to the blockchain node device.

8. The blockchain integrated station according to claim 1, further comprising a certificate authority device, wherein the certificate authority device is configured to:
in response to an authentication request initiated by the blockchain node device, verify the authentication request; and
in response to that the authentication request passes verification, send a digital certificate to the blockchain node device by using a root certificate, wherein the root certificate is generated based on a certificate authority service started by the certificate authority device.

9. The blockchain integrated station according to any one of the preceding claims, comprising one or more additional blockchain node devices different from the blockchain node device, each of the one or more additional blockchain node devices corresponding to a respective node in the blockchain network.

10. A blockchain network, comprising a plurality of blockchain nodes each formed by a blockchain integrated station according to any one of claims 1 to 9.

## Patentansprüche

1. Integrierte Blockchain-Station, umfassend eine Blockchain-Knotenvorrichtung, wobei die Blockchain-Knotenvorrichtung eine intelligente Netzwerkkarte (21), eine zentrale Verarbeitungseinheit (22), einen Smart Contract-Verarbeitungschip (23), einen Speicher (24) und eine kryptografische Beschleunigerkarte (25) umfasst; wobei die intelligente Netzwerkkarte (21) dazu eingerichtet ist, einen Transaktionskonsens mit anderen Knoten in einem Blockchain-Netzwerk, zu dem die Blockchain-Knotenvorrichtung gehört, durchzuführen und eine Transaktion, die den Transaktionskonsens bestanden hat, auf die zentrale Verarbeitungseinheit (22) hochzuladen;
die zentrale Verarbeitungseinheit (22) dazu eingerichtet ist, die durch die intelligente Netzwerkkarte (21) hochgeladene Transaktion zu empfangen und die Transaktion zum Aufrufen eines Smart Contracts an den Smart Contract-Verarbeitungschip (23) zu senden;
der Smart Contract-Verarbeitungschip (23) dazu eingerichtet ist, die durch die zentrale Verarbeitungseinheit (22) gesendete Transaktion zu empfangen und den durch die Transaktion aufgerufenen Smart Contract auszuführen, und ein Berechnungsmodul, ein Verschlüsselungs- und Entschlüsselungsmodul und ein Verhandlungsmodul umfasst;
das Verschlüsselungs- und Entschlüsselungsmodul dazu eingerichtet ist, falls die durch die zentrale Verarbeitungseinheit (22) gesendete Transaktion eine Geheimtexttransaktion ist, die Geheimtexttransaktion unter Verwendung eines privaten Knotenschlüssels der Blockchain-Knotenvorrichtung zu entschlüsseln und einen Contract-Zustandswert, der an dem durch die Geheimtexttransaktion aufgerufenen Smart Contract beteiligt ist, unter Verwendung eines Dienstschlüssels zu verschlüsseln, wobei der private Knotenschlüssel einem öffentlichen Knotenschlüssel entspricht und die Transaktion unter Verwendung des öffentlichen Knotenschlüssels durch eine Client-Vorrichtung verschlüsselt und übertragen wird und die verschlüsselte und übertragene Transaktion unter Verwendung des privaten Knotenschlüssels durch die Blockchain-Knotenvorrichtung entschlüsselt wird, und wobei der Dienstschlüssel ein symmetrischer Schlüssel ist, der zum Verschlüsseln und Speichern von Dienstdaten verwendet wird;
das Berechnungsmodul elektrisch mit der zentralen Verarbeitungseinheit (22) und dem Verschlüsselungs- und Entschlüsselungsmodul verbunden ist und dazu eingerichtet ist, eine durch die zentrale Verarbeitungseinheit (22) gesendete Klartexttransaktion zu empfangen und einen entsprechenden Smart Contract aufzurufen, und dazu eingerichtet ist, einen Klartexttransaktionsinhalt zu empfangen, der erhalten wird, nachdem das Verschlüsselungs- und Entschlüsselungsmodul die Geheimtexttransaktion entschlüsselt, den entsprechenden Smart Contract aufzurufen und den Contract-Zustandswert an das Verschlüsselungs- und Entschlüsselungsmodul zur Verschlüsselung zurückzugeben;
das Verhandlungsmodul dazu eingerichtet ist, Verhandlungsinformationen zu erzeugen, und die Verhandlungsinformationen zum Erzeugen eines Dateibereitstellungsschlüssels und eines Dienstgeheimnisbereitstellungsschlüssels durch Verhandlung verwendet werden;
der Speicher (24) dazu eingerichtet ist, Blockchain-Daten und Zustandsdaten zu speichern;
die kryptografische Beschleunigerkarte (25) ein Schlüsselverwaltungsmodul und ein Signaturmodul umfasst;
das Schlüsselverwaltungsmodul dazu eingerichtet ist, einen Root-of-Trust-Schlüssel zu verwalten; und
das Signaturmodul elektrisch mit dem Schlüsselverwaltungsmodul, dem Verhandlungsmodul und der intelligenten Netzwerkkarte (21) verbunden ist und dazu eingerichtet ist, den Root-of-Trust-Schlüssel zu lesen und die Verhandlungsinformationen zu signieren und die signierten Verhandlungsinformationen über die intelligente Netzwerkkarte (21) an einen Anbieter der integrierten Blockchain-Station zu senden, so dass der Anbieter eine binäre Bilddatei, die der Blockchain-Knotenvorrichtung entspricht, auf der integrierten Blockchain-Station unter Verwendung des durch Verhandlung erhaltenen Dateibereitstellungsschlüssels bereitstellt, wobei die unter Verwendung des Dateibereitstellungsschlüssels verschlüsselte binäre Bilddatei durch den Smart Contract-Verarbeitungschip (23) von dem Anbieter empfangen wird und die verschlüsselte binäre Bilddatei durch den Smart Contract-Verarbeitungschip (23) basierend auf dem Dateibereitstellungsschlüssel entschlüsselt wird, und den privaten Knotenschlüssel und den Dienstschlüssel auf dem Smart Contract-Verarbeitungschip (23) durch den Dienstgeheimnisbereitstellungsschlüssel bereitstellt, wobei der private Knotenschlüssel und der Dienstschlüssel des Blockchain-Knotens unter Verwendung des Dienstgeheimnisbereitstellungsschlüssels verschlüsselt werden und durch den Smart Contract-Verarbeitungschip (23) von dem Anbieter empfangen werden, so dass der Smart Contract-Verarbeitungschip (23) den privaten Knotenschlüssel und den Dienstschlüssel unter Verwendung des Dienstgeheimnisbereitstellungsschlüssels entschlüsselt und den privaten Knotenschlüssel und den Dienstschlüssel lokal bereitstellt.

2. Integrierte Blockchain-Station nach Anspruch 1, wobei die intelligente Netzwerkkarte (21) umfasst:
ein Speichermodul, das dazu eingerichtet ist, eine Transaktionsfilterungsregel aufzuzeichnen; und
ein Filterungsmodul, das elektrisch mit dem Speichermodul verbunden und dazu eingerichtet ist, die im Speichermodul aufgezeichnete Transaktionsfilterungsregel zu lesen und eine Filterung nach dem Parsen der empfangenen Transaktion basierend auf der Transaktionsfilterungsregel durchzuführen, so dass eine gefilterte Transaktion am Transaktionskonsens teilnimmt.

3. Integrierte Blockchain-Station nach Anspruch 1, wobei
der Smart Contract-Verarbeitungschip (23) eine Mehrzahl von Berechnungsmodulen umfasst und die Mehrzahl von Berechnungsmodulen dazu eingerichtet ist, Smart Contracts auszuführen, die durch verschiedene Transaktionen parallel aufgerufen werden.

4. Integrierte Blockchain-Station nach Anspruch 1, wobei der Smart Contract-Verarbeitungschip (23) durch Konfigurieren eines FPGA-Chips unter Verwendung einer vordefinierten Schaltungslogikkonfigurationsdatei erhalten wird.

5. Integrierte Blockchain-Station nach Anspruch 4, wobei die Blockchain-Knotenvorrichtung ferner einen Flash-Chip (26) umfasst; der Flash-Chip (26) elektrisch mit dem Smart Contract-Verarbeitungschip (23) verbunden ist und der Flash-Chip (26) dazu eingerichtet ist, die vordefinierte Schaltungslogikkonfigurationsdatei zu speichern.

6. Integrierte Blockchain-Station nach Anspruch 1, ferner umfassend eine Off-Chain-Rechenknotenvorrichtung, wobei die Off-Chain-Rechenknotenvorrichtung dazu eingerichtet ist:
in Reaktion auf eine Off-Chain-Contract-Aufrufanforderung, die durch die Blockchain-Knotenvorrichtung initiiert wird, einen Off-Chain-Contract auszuführen, der durch die Off-Chain-Contract-Aufrufanforderung angegeben wird, und ein Ausführungsergebnis des Off-Chain-Contracts an die Blockchain-Knotenvorrichtung zurückzugeben; wobei
der Off-Chain-Contract auf der Off-Chain-Rechenknotenvorrichtung vorab eingesetzt wird.

7. Integrierte Blockchain-Station nach Anspruch 1, ferner umfassend einen Cross-Chain-Proxy-Server, wobei der Cross-Chain-Proxy-Server dazu eingerichtet ist:
in Reaktion auf eine externe Datenzugriffsanforderung, die durch die Blockchain-Knotenvorrichtung initiiert wird, mindestens eines durchzuführen von: Zugreifen auf ein Ziel-Blockchain-Netzwerk oder einen Remote-Server, um Daten an das Ziel-Blockchain-Netzwerk oder den Remote-Server zu senden, oder Zurückgeben eines Zugriffsergebnisses an die Blockchain-Knotenvorrichtung.

8. Integrierte Blockchain-Station nach Anspruch 1, ferner umfassend eine Zertifikatautoritätsvorrichtung, wobei die Zertifikatautoritätsvorrichtung dazu eingerichtet ist:
in Reaktion auf eine Authentifizierungsanforderung, die durch die Blockchain-Knotenvorrichtung initiiert wird, die Authentifizierungsanforderung zu verifizieren; und
in Reaktion darauf, dass die Authentifizierungsanforderung die Verifizierung besteht, ein digitales Zertifikat unter Verwendung eines Root-Zertifikats an die Blockchain-Knotenvorrichtung zu senden, wobei das Root-Zertifikat basierend auf einem Zertifikatautoritätsdienst erzeugt wird, der durch die Zertifikatautoritätsvorrichtung gestartet wird.

9. Integrierte Blockchain-Station nach einem der vorhergehenden Ansprüche, umfassend eine oder mehrere zusätzliche Blockchain-Knotenvorrichtungen, die sich von der Blockchain-Knotenvorrichtung unterscheiden, wobei jede der einen oder mehreren zusätzlichen Blockchain-Knotenvorrichtungen einem jeweiligen Knoten in dem Blockchain-Netzwerk entspricht.

10. Blockchain-Netzwerk, umfassend eine Mehrzahl von Blockchain-Knoten, die jeweils durch eine integrierte Blockchain-Station nach einem der Ansprüche 1 bis 9 gebildet sind.

## Revendications

1. Station intégrée de chaîne de blocs, comprenant un dispositif de noeud de chaîne de blocs, le dispositif de noeud de chaîne de blocs comprenant une carte réseau intelligente (21), une unité centrale de traitement (22), une puce de traitement de contrat intelligent (23), une mémoire (24) et une carte d'accélérateur cryptographique (25) ; dans laquelle
la carte réseau intelligente (21) est configurée pour effectuer un consensus de transaction avec d'autres noeuds dans un réseau de chaîne de blocs auquel le dispositif de noeud de chaîne de blocs appartient, et télécharger une transaction qui a passé le consensus de transaction sur l'unité centrale de traitement (22) ;
l'unité centrale de traitement (22) est configurée pour recevoir la transaction téléchargée par la carte réseau intelligente (21) et envoyer la transaction pour appeler un contrat intelligent à la puce de traitement de contrat intelligent (23) ;
la puce de traitement de contrat intelligent (23) est configurée pour recevoir la transaction envoyée par l'unité centrale de traitement (22) et exécuter le contrat intelligent appelé par la transaction et comprend un module de calcul, un module de cryptage et de décryptage et un module de négociation ;
le module de cryptage et de décryptage est configuré pour, dans un cas où la transaction envoyée par l'unité centrale de traitement (22) est une transaction de texte chiffré, décrypter la transaction de texte chiffré en utilisant une clé privée de noeud du dispositif de noeud de chaîne de blocs et crypter une valeur d'état de contrat impliquée dans le contrat intelligent appelé par la transaction de texte chiffré en utilisant une clé de service, dans laquelle la clé privée de noeud correspond à une clé publique de noeud, et la transaction est cryptée et transmise en utilisant la clé publique de noeud par un dispositif client et la transaction cryptée et transmise est décryptée en utilisant la clé privée de noeud par le dispositif de noeud de chaîne de blocs, et dans laquelle la clé de service est une clé symétrique utilisée pour crypter et stocker des données de service ;
le module de calcul est connecté électriquement à l'unité centrale de traitement (22) et au module de cryptage et de décryptage et est configuré pour recevoir une transaction en texte clair envoyée par l'unité centrale de traitement (22) et appeler un contrat intelligent correspondant, et est configuré pour recevoir un contenu de transaction en texte clair obtenu après que le module de cryptage et de décryptage a décrypté la transaction de texte chiffré, appeler le contrat intelligent correspondant et renvoyer la valeur d'état de contrat au module de cryptage et de décryptage pour cryptage ;
le module de négociation est configuré pour générer des informations de négociation, et les informations de négociation sont utilisées pour générer une clé de déploiement de fichier et une clé de déploiement de secret de service par négociation ;
la mémoire (24) est configurée pour stocker des données de chaîne de blocs et des données d'état ;
la carte d'accélérateur cryptographique (25) comprend un module de gestion de clé et un module de signature ;
le module de gestion de clé est configuré pour maintenir une clé racine de confiance ; et
le module de signature est connecté électriquement au module de gestion de clé, au module de négociation et à la carte réseau intelligente (21), et est configuré pour lire la clé racine de confiance et signer les informations de négociation, et envoyer les informations de négociation signées à un fournisseur de la station d'intégration de chaîne de blocs par l'intermédiaire de la carte réseau intelligente (21), de sorte que le fournisseur déploie un fichier d'image binaire correspondant au dispositif de noeud de chaîne de blocs sur la station intégrée de chaîne de blocs en utilisant la clé de déploiement de fichier obtenue par négociation, dans laquelle le fichier d'image binaire crypté en utilisant la clé de déploiement de fichier est reçu du fournisseur par la puce de traitement de contrat intelligent (23) et le fichier d'image binaire crypté est décrypté par la puce de traitement de contrat intelligent (23) sur la base de la clé de déploiement de fichier, et déploie la clé privée de noeud et la clé de service sur la puce de traitement de contrat intelligent (23) par l'intermédiaire de la clé de déploiement de secret de service, dans laquelle la clé privée de noeud et la clé de service du noeud de chaîne de blocs sont cryptées en utilisant la clé de déploiement de secret de service et sont reçues du fournisseur par la puce de traitement de contrat intelligent (23), de sorte que la puce de traitement de contrat intelligent (23) décrypte la clé privée de noeud et la clé de service en utilisant la clé de déploiement de secret de service et déploie la clé privée de noeud et la clé de service localement.

2. Station intégrée de chaîne de blocs selon la revendication 1, dans laquelle la carte réseau intelligente (21) comprend :
un module de stockage, configuré pour enregistrer une règle de filtrage de transaction ; et
un module de filtrage, connecté électriquement au module de stockage et configuré pour lire la règle de filtrage de transaction enregistrée dans le module de stockage, et effectuer un filtrage après avoir analysé la transaction reçue sur la base de la règle de filtrage de transaction, de sorte qu'une transaction filtrée participe au consensus de transaction.

3. Station intégrée de chaîne de blocs selon la revendication 1, dans laquelle la puce de traitement de contrat intelligent (23) comprend une pluralité de modules de calcul, et la pluralité de modules de calcul est configurée pour exécuter des contrats intelligents appelés par différentes transactions en parallèle.

4. Station intégrée de chaîne de blocs selon la revendication 1, dans laquelle la puce de traitement de contrat intelligent (23) est obtenue en configurant une puce FPGA en utilisant un fichier de configuration de logique de circuit prédéfini.

5. Station intégrée de chaîne de blocs selon la revendication 4, dans laquelle le dispositif de noeud de chaîne de blocs comprend en outre une puce flash (26) ; la puce flash (26) est connectée électriquement à la puce de traitement de contrat intelligent (23), et la puce flash (26) est configurée pour stocker le fichier de configuration de logique de circuit prédéfini.

6. Station intégrée de chaîne de blocs selon la revendication 1, comprenant en outre un dispositif de noeud informatique hors chaîne, dans laquelle le dispositif de noeud informatique hors chaîne est configuré pour :
en réponse à une demande d'appel de contrat hors chaîne lancée par le dispositif de noeud de chaîne de blocs, exécuter un contrat hors chaîne indiqué par la demande d'appel de contrat hors chaîne, et renvoyer un résultat d'exécution du contrat hors chaîne au dispositif de noeud de chaîne de blocs ; dans laquelle
le contrat hors chaîne est pré-déployé sur le dispositif de noeud informatique hors chaîne.

7. Station intégrée de chaîne de blocs selon la revendication 1, comprenant en outre un serveur proxy inter-chaîne, dans laquelle le serveur proxy inter-chaîne est configuré pour :
en réponse à une demande d'accès à des données externes lancée par le dispositif de noeud de chaîne de blocs, effectuer au moins l'un parmi : l'accès à un réseau de chaîne de blocs cible ou à un serveur distant pour envoyer des données au réseau de chaîne de blocs cible ou au serveur distant, ou le renvoi d'un résultat d'accès au dispositif de noeud de chaîne de blocs.

8. Station intégrée de chaîne de blocs selon la revendication 1, comprenant en outre un dispositif d'autorité de certification, dans laquelle le dispositif d'autorité de certification est configuré pour :
en réponse à une demande d'authentification lancée par le dispositif de noeud de chaîne de blocs, vérifier la demande d'authentification ; et
en réponse au fait que la demande d'authentification réussit la vérification, envoyer un certificat numérique au dispositif de noeud de chaîne de blocs en utilisant un certificat racine, dans laquelle le certificat racine est généré sur la base d'un service d'autorité de certification lancé par le dispositif d'autorité de certification.

9. Station intégrée de chaîne de blocs selon l'une quelconque des revendications précédentes, comprenant un ou plusieurs dispositifs de noeud de chaîne de blocs supplémentaires différents du dispositif de noeud de chaîne de blocs, chacun des un ou plusieurs dispositifs de noeud de chaîne de blocs supplémentaires correspondant à un noeud respectif dans le réseau de chaîne de blocs.

10. Réseau de chaîne de blocs, comprenant une pluralité de noeuds de chaîne de blocs formés chacun par une station intégrée de chaîne de blocs selon l'une quelconque des revendications 1 à 9.
